# EUROPEAN PATENT SPECIFICATION

(11) **EP 2 990 635 B1**
(45) Date of publication and mention of the grant of the patent: **28.06.2017**
(21) Application number: 14182078.7
(22) Date of filing: 25.08.2014
(51) Int. Cl.: F02M 35/10, H01R 13/625, F01N 13/18

(54) **Connector arrangement**
Verbinderanordnung
Agencement de connecteur

(43) Date of publication of application: 02.03.2016
(73) Proprietor: Volvo Car Corporation, 40531 Göteborg (SE)
(72) Inventor: Rehn, Mikael, 41651 Göteborg (SE)
(74) Representative: Volvo Car Corporation

(56) References cited:
- WO-A1-85/05667
- WO-A1-02/101884
- WO-A1-2014/056652
- DE-A1- 19 637 055
- US-A- 2 851 288

## Description

### TECHNICAL FIELD

The invention relates to a connector arrangement comprising a tubular connector element configured for mounting on an inlet of a further component and an annular locking ring arranged around an end section of the connector element.

The invention can be used in different types of arrangements of conduits or tubular connections in which there is a need for connecting a tubular connector element to a further component. For example, the invention can be used in an engine compartment of a vehicle, for connecting various conduits between components in said engine compartment.

### BACKGROUND

In the automotive industry, in particular in the field of manufacturing of vehicles, there is a constant need for simple, quick and cost-effective methods and arrangements for assembly of vehicles and vehicle parts.

For example, with regard to an engine arrangement in a vehicle, there is often a complex arrangement of conduits and tubular elements between various components of the engine arrangement, such as inlets and outlets of a compressor, a turbo device, a catalytic converter or other parts of the engine arrangement.

It is a general requirement that tubular conduits and connections for such conduits should be of high quality and also be quick and easy to mount, i.e. during the actual assembly of the engine arrangement or the entire vehicle. An example of such connections is the inlet and outlet conduits of a turbo device.

To solve the above-mentioned requirements, it is today known to provide connecting arrangements with tubular end sections which can be fastened by screw connections and similar so as to provide a secure connection of said connecting arrangement. Also, there exist solutions which include bayonet-type fastening devices for mounting of inlet tubes for turbo devices and similar components. Connector arrangements for internal combustion engines can be found in WO2014/056652A1, WO85/05667A1, DE19637055A1, WO02/101884A1 and US2851288A. However, there is a constant need for improved connector devices which are reliable and functionally secure and which also provides a possibility for easy manufacturing and easy assembly. This may lead to advantages in the form of a more cost-effective manufacturing process of vehicles.

### SUMMARY

Consequently, an object of the invention is to provide a connector arrangement which allows an improved mounting procedure as compared with the above-mentioned prior art solutions while providing a secure connection.

The above-mentioned object is achieved by a connector arrangement comprising a tubular connector element configured for mounting on an inlet of a further component and an annular locking ring arranged around an end section of the connector element. The locking ring comprises at least two wing elements extending in a radial direction and configured for being inserted into corresponding guide sections in said inlet, and in that at least one of said wing elements constitutes a locking wing with a resilient protrusion extending along the periphery of the locking ring and cooperating with a locking recess in a corresponding guide section upon rotating said locking ring in relation to said inlet.

The invention provides certain advantages over previously known technology, primarily due to the fact that it leads to a quick and easy mounting procedure which in turn simplifies the assembly of the engine arrangement.

According to an embodiment, the resilient protrusion is configured so that its tip extends further in a radial direction than said locking wing. In this manner, the resilient protrusion may be bent and then snap back during locking of the locking wing. Preferably, the locking recess has a radially extending end wall which serves to lock the protruding element.

Furthermore, according to an embodiment, the protruding element comprises a first section which connects to the locking wing and has a width which is less than the width of said locking wing. In this manner, the protruding element will generate a loud "click" when it is locked. This clearly audible "click" sound will serve as an acknowledgement for the person who is locking the connector device that the locking ring is locked.

Futhermore, according to an embodiment, the protruding element comprises a section extending in the axial direction of the connector element and serving as a means for unlocking said connector arrangement when being pushed.

Preferably, the locking ring also comprises a radially extending stop element between the protruding element and the locking ring and constituting a limit for flexing said protruding element in the radial direction. This prevents the protruding element from being broken during unlocking.

According to an embodiment, the locking ring is freely rotatable around the connector element. According to a further embodiment, the locking ring is fixedly mounted on said connector element.

The invention can be applied in different types of vehicles, such as cars, trucks, and buses.

Further advantages and advantageous features of the invention are disclosed in the following description and in the dependent claims.

### BRIEF DESCRIPTION OF THE DRAWINGS

Further objects, features, and advantages of the present disclosure will appear from the following detailed description, wherein certain aspects of the disclosure will be described in more detail with reference to the accompanying drawings, in which:
- Fig. 1: shows in a schematical manner an engine arrangement for a vehicle;
- Fig. 2: is a perspective view of a connector arrangement according to an embodiment of the invention;
- Fig. 3: is a plane view as seen towards an end of the connector arrangement;
- Fig. 4: is a perspective view of the embodiment in a first operating condition during locking of a connector element to a further component;
- Fig. 5: is a perspective view of the embodiment in a second operating condition in which the connector element is locked to said further component;
- Fig. 6: is a cross-sectional view of the embodiment, in its locked condition; and
- Fig. 7: is a plane view of a second embodiment of the invention.

### DETAILED DESCRIPTION

Different embodiments of the present invention will be described with reference to the accompanying drawings. The arrangements described below can be realized in many different forms and should not be construed as being limited to the embodiments described below.

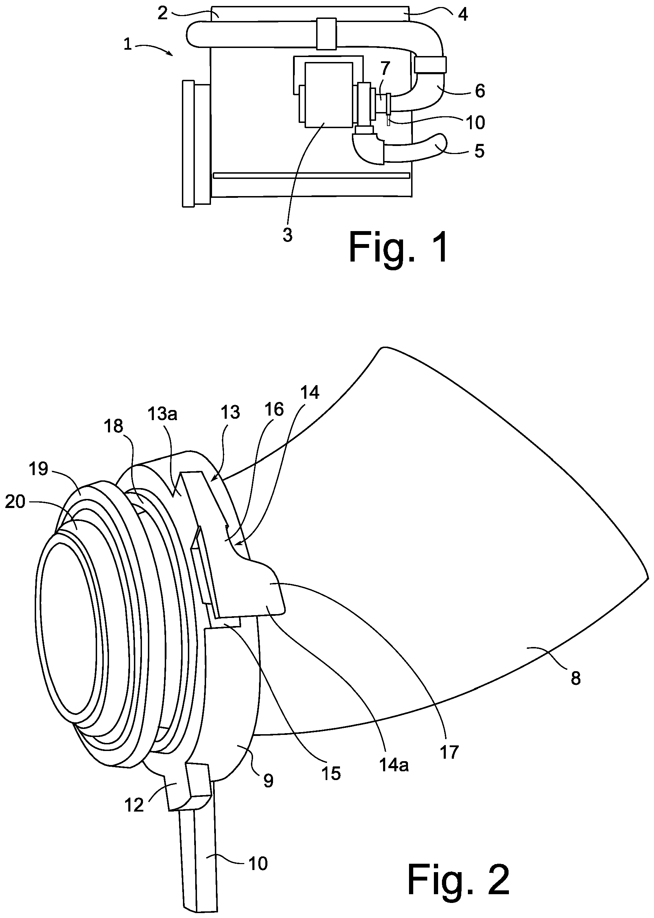

With initial reference to Fig. 1, there is shown a simplified side view of an engine arrangement 1 in a vehicle. The engine arrangement 1 comprises an internal combustion engine 2 with a conventional turbo device 3 and an associated inlet conduit 4 and outlet conduit 5 of the turbo device 4. The inlet conduit 4 is connected to the turbo device 3 by means of a connector arrangement 6, which extends to the turbo device 3 and can be connected to said turbo device 3 via an inlet connection 7. The connector arrangement 6 and the inlet connection 7 are shown in a simplified manner in Fig. 1 and will consequently be described in greater detail below.

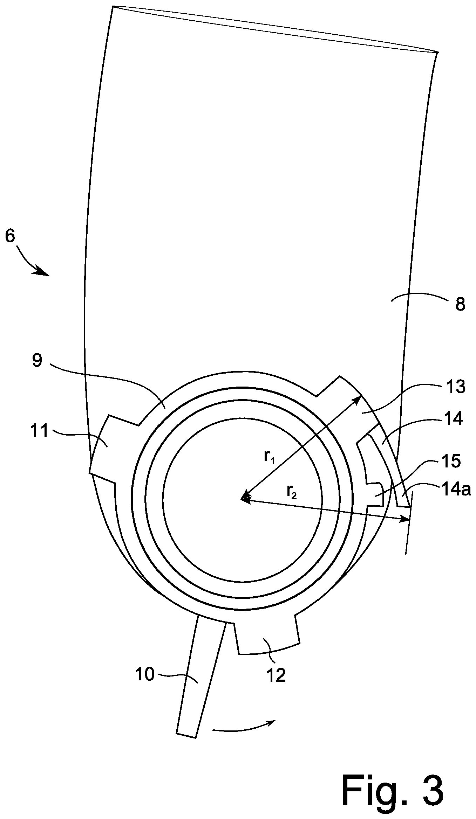

With reference now to both Figs. 2 and 3, it can be noted that the connector arrangement 6 comprises a connector element 8 which is generally tubular and which has an end section which supports a generally annular locking ring 9 which is arranged around said connector element 8. According to this first embodiment of the invention, the locking ring 9 is arranged so that it can be freely rotated on the connector element 8, i.e. it is not fixed on the end section of the connector element 8. Furthermore, the locking ring 9 supports an operating arm 10 by means of which the locking ring 9 can be manually forced to rotate around the connector element 8 during a locking maneouvre, as will be described in detail below. The operating arm 10 is also visible in Fig. 1.

According to the embodiment, the locking ring 9 is formed with three wing elements 11, 12, 13 which are disposed at generally equal distance around the periphery of the locking ring 9. It should be noted that the first wing element 11 is not visible in Fig. 2. The wing elements 11, 12, 13 are formed in a manner so that they protrude outwards, i.e. in an axial direction, with respect to the locking ring 9. Two wing elements 11, 12, are formed with generally similar dimensions, i.e. extending in a radial direction and also extending along a minor part of the periphery of the locking ring 9, whereas the third wing element 13 has the same shape as the first two wing elements 11, 12 but with the addition of a protruding element 14 which extends along a part of the circumference of the locking ring 9. As will be described below, this third wing element 13 has a function of locking the locking ring 9 to the inlet connection 7 of the turbo device 3. For this reason, this element is also referred to as a locking wing 13.

The protruding element 14 of the locking wing 13 is slightly resilient, i.e. when influenced by a force (acting on the protruding element 14 and being directed axially towards the center of the connector element 8) it may flex to a certain degree with respect to the locking ring 9. Also, the radius from the centre of the connector element 8 to the outer edge of the locking wing 13, as indicated with r₁ in Fig. 3, is slightly less than the distance from the centre of the connector element 8 to the outer edge of the tip 14a of the protruding element 14, as indicated with r₂ in Fig. 3. The purpose of this design of the protruding element 14 is to allow locking of the locking ring 9 during a maneouvre in which the locking ring 9 is rotated - in a direction as indicated by means of an arrow in Fig. 3 - while forcing the tip 14a of the protruding element 14 to be forced to bend slightly inwards and then spring out towards an edge in the inlet connection 7 so as to be locked (to be described below).

The locking ring 9 is also provided with a further protrusion 15, which extends between the locking ring 9 and a certain axial distance under the tip 14a of the protruding element 14. This is shown particularly clearly in Fig. 3. Also, as shown in Figs. 2 and 3, the protrusion 15 extends in the radial direction along a part of the locking ring 9.

With particular reference to Fig. 2, it is noted that the protruding element 14 is formed with a relatively narrow first section 16 and a relatively wide second section 17, wherein the first section 16 is closest to the base part 13a of the locking wing 13 and wherein the second section 17 is closest to the tip 14a of the protruding element 14. In this regard, it should be noted that the width of the first section 16 is slightly less than the width of the base part 13a of the locking wing 13.

Also, the second section 17 of the protruding element 14 is consideraby wider than the remaining parts of the protruding element 14. As will be described below, the second section 17 is used as a means to be pressed down by an operator so as to unlock the locking ring from a locked condition if this is desired.

As shown in Fig. 2, the locking ring 9 is also formed with an annular flange 18 which is positioned on the side of the locking ring 9 which faces the end portion of the connector element 8. The purpose of the flange 18 is to be inserted into a corresponding internal recess of a second annular ring 19. This second annular ring 19 is arranged between the locking ring 9 and an annular sealing ring 20, which is consequently also arranged on the end portion of the connector element 8. The second annular ring 19 and the sealing ring 20 constitutes a sealing which also absorbs slight differences in dimensions and tolerances between the various components.

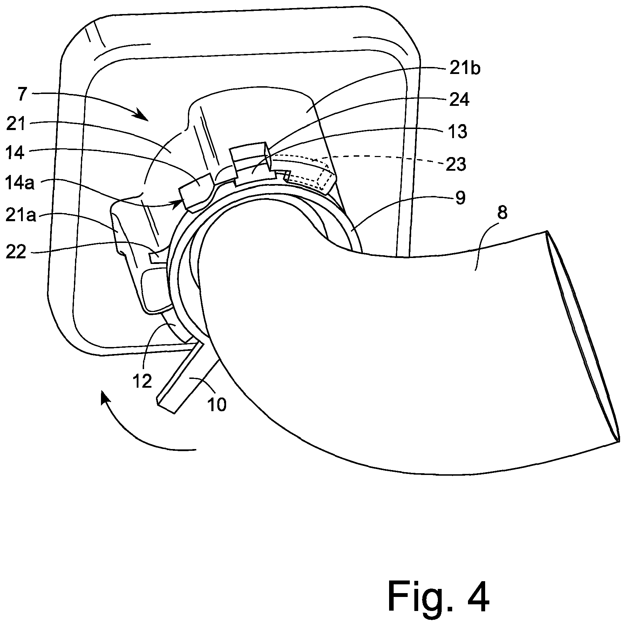

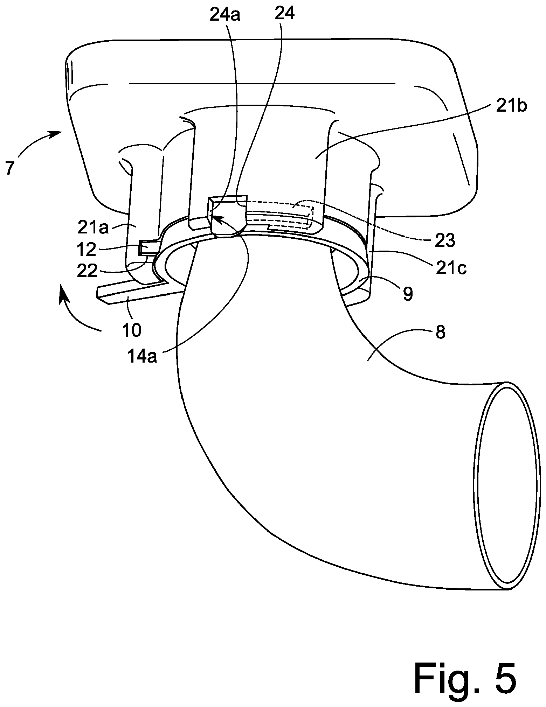

A manouvre for mounting and locking the locking ring 9 to the inlet connection 7 of the turbo device 3 (see Fig. 1) will now be described with reference to Figs. 4 and 5. Initially, with reference to Fig. 4, it is noted that the connector element 8 is positioned so that its end portion is aligned with a corresponding opening of the inlet connection 7. The inlet connection 7 is formed by a generally cylindrical and sleeve-shaped housing 21 which is wider than the end portion of the connector device 8 and which is formed with three guide sections 21a, 21b, 21c, of which only the two first guide sections 21a, 21b are visible in Fig. 4.

As shown in Fig. 4, the guide sections 21a, 21b are formed with a duct 22, 23, each having the function of a "guide passage" extending through the respective guide section 21a, 21b. A corresponding wing element 12, 13 may be inserted so as to pass through an associated duct 22, 23. A similar duct is formed in the third guide section 21c although it is not visible in Fig. 4.

Furthermore, Fig. 4 describes an initial, unlocked position of the locking ring 9 and Fig. 5 shows a locked position of the locking ring 9. In the unlocked position of the locking ring 9, each wing element is positioned just in front of a corresponding duct. Furthermore, the locking manoeuvre of the locking ring 9 can be said to be initiated when each wing element is guided through its corresponding duct while the locking ring 9 is forced to rotate in the direction as indicated by an arrow by pushing on the operating arm 10. This causes the wing elements 11, 12, 13 to be guided and inserted into the corresponding duct of each guide section 21a, 21b, 21c.

As the locking ring 9 is rotated, all the wing elements 11, 12, 13 will eventually be guided through their corresponding internal ducts in the guide sections 21a, 21b, 21c in the inlet component 7. Furthermore, the guide sections 21a, 21b, 21c are formed so that their ducts (of which the above-mentioned ducts 22 and 23 are shown clearly in Fig. 4) are generally of the same length as the length of the corresponding wing elements. This means that each one of the wing elements 11, 12, 13 may be fully inserted inside a corresponding duct during locking.

During the locking maneouvre, the third wing element 13 with the protruding element 14 will be guided into the second guide section 21b while the locking ring 9 is rotated as indicated above. Here, it should be noted that the second guide section 21b is both formed with a duct 23 which accommodates the third wing element 13, and is also formed with a cut-out section forming a recess 24. When the third wing element 13 has been rotated to be positioned under the recess 24, the protruding element 14 will be in a position at the left side (as seen in Fig. 4) of the corresponding guide section 21b.

Now, as the locking ring 9 is further rotated in the direction of the arrow in Fig. 4, the guide section 21b will act on the protruding element 14 so that it will be slightly bent downwards (i.e. towards the locking ring 9) through its resiliency. When the tip 14a of the protruding element 14 finally reaches a position which is aligned with the recess 24, the tip 14a of the protruding element 14 will flex back and snap in a radial direction into the recess 24. This position is shown in Fig. 5. This means that the tip 14a now bears against a rear wall 24a of the recess 24 and cannot be rotated in the reverse direction. In other words, the locking ring 9 is now locked and cannot be rotated. Consequently, the entire connector device 8 is now locked to the inlet connection 7.

As mentioned above, and with reference to Fig. 5, it should be noted that the resilient protruding element 14 is configured so that its tip 14a extends further in a radial direction than the outer edge of the locking wing 13 (see also Fig. 3). This means that the protruding element 14 is bent slightly inwards during rotation of the locking ring 9, i.e. as the protruding element 14 is pressed through the corresponding duct 23 of the guide section 21 b. Finally, the protruding element 14 will click into place as shown in Fig. 5 due to the resiliency of the protruding element 14.

Also, as shown in Fig. 2, the protruding element 14 comprises a first section 16 which connects to the locking wing 13 and which has a width which is less than the width of said locking wing 13. This means that the first section 16 and the second section 17 of the protruding element 14 will not be in contact with the inside of the duct 23 while the locking wing 13 is inserted into said duct 23 during locking of the locking ring 9. As a result, the protruding element 14 will generate a clear and loud "click" sound as the tip 14a of the protruding element 14 snaps into the recess 24 of the guide section 21a. This is an advantage during assembly of the engine arrangement, since the person who is mounting the connector arrangement 6 will know for certain that the connector device 8 has been locked into place when the "click" sound is generated. A further advantage of this arrangement is that less friction is generated when the locking wing 13 is pressed through its corresponding duct 23.

Furthermore, the protruding element 14 comprises an outer section 17 which extends in the axial direction of the connector element 8 and forms a "press tab", i.e. it serves as a means for unlocking said connector arrangement 6 when being pushed down. In other words, when the locking ring 9 is to be released, it is necessary to press down the outer section 17 of the protruding element 14 while rotating the locking ring 9 in a direction which is the opposite of the direction of the arrow in Figs. 4 and 5. Also, due to the fact that the locking ring 9 comprises a radially extending stop element 15 (see in particular Fig. 3) which is positioned radially under the protruding element 14, this stop element 15 will define a limit for bending the protruding element 14 in the radial direction. This prevents the protruding element 14 from being pushed so hard that it may break during an unlocking maneouvre.

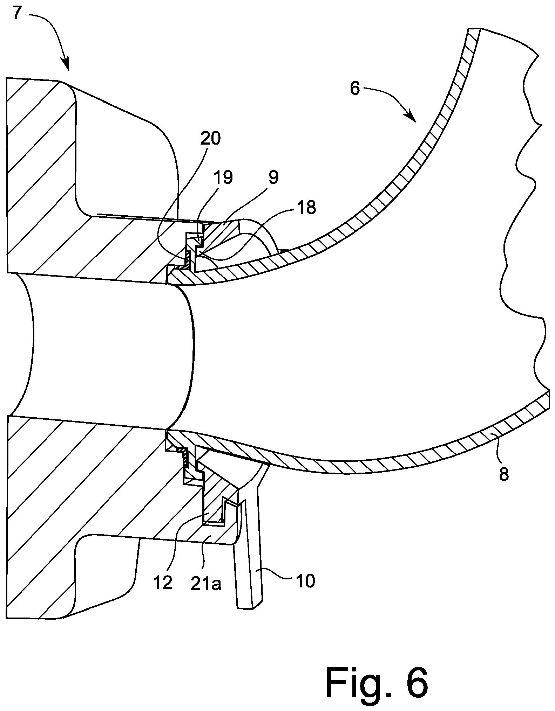

Fig. 6 is a partly cross-sectional view of the locking ring 9 in its locked condition. The drawing shows the connector arrangement 6 with one of its wing elements 12 being inserted into a corresponding guide section 21a. Also, the operating arm 10 of the locking ring 9 is shown.

As explained above with reference to Fig. 2, the locking ring 9 has an annular flange 18, which is positioned next to the second annular ring 19. Also, a sealing ring 20 is positioned next to the second annular ring 19 and forms a seal between the connector element 8 and the inlet connection 7.

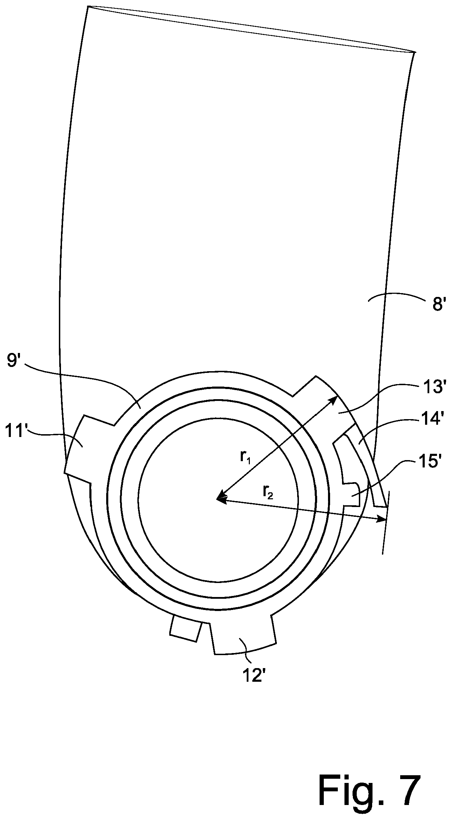

The embodiment described above is based on the fact that the locking ring 9 is freely rotatable around the end portion of the connector device 8. According to an alternative embodiment, the locking ring may be fixed in relation to the connector device. Such an arrangement may be more easy and cost-effective to manufacture, but will also require that the entire connector device 8 is turned during the locking of the locking ring 9, which normally is possible depending on the space available in an engine arrangement. A plane view of this embodiment is shown in Fig. 7, which consequently shows a fixed locking ring 9' which is integrated with the connector element 8'. In a manner which is similar to the embodiment shown in Fig. 3, the fixed locking ring 9' comprises a first wing element 11', a second wing element 12' and a third wing element 13'. The third wing element 13' has the function of locking the locking ring 9' (and consequently also the connector element 8') to an inlet connection (not shown in Fig. 7) of an engine arrangement. The remaining parts of the embodiment shown in Fig. 7, i.e. the protruding element 14' and the second protrusion 15', correspond to those shown in Figs. 2 and 3. For this reason, they are not described in further detail.

It is to be understood that the present invention is not limited to the embodiments described above and illustrated in the drawings. The skilled person will recognize that changes and modifications may be made within the scope of the appended claims.

## Claims

1. Gas connector arrangement (6) in a vehicle engine (2) and comprising a tubular connector element (8; 8') configured for mounting on an inlet (7) of a further component (3) and an annular locking ring (9; 9') arranged around an end section of the connector element (8; 8'), said locking ring (9; 9') comprising at least two wing elements (11; 11', 12; 12', 13; 13') extending in a radial direction and configured for being inserted into corresponding guide sections (21a, 21b, 21c) in said inlet (7), wherein that at least one of said wing elements (13; 13') constitutes a locking wing (13; 13') with a resilient protrusion (14; 14') extending along the periphery of the locking ring (9; 9') and cooperating with a locking recess (24) in a corresponding guide section (21 b) upon rotating said locking ring (9; 9') in relation to said inlet (7), **characterized in that** said resilient protrusion (14; 14') is configured so that its tip (14a) extends further in a radial direction than said locking wing (13; 13').

2. Gas connector arrangement (6) according to claim 1, wherein said locking recess (24) comprises a radially extending end wall (24a) serving as a locking wall for the protruding element (14; 14') in its locked condition.

3. Gas connector arrangement (6) according to any one of the preceding claims, wherein the protruding element (14; 14') comprises a first section (16) which connects to the locking wing (13; 13') and which has a width which is less than the width of said locking wing (13; 13').

4. Gas connector arrangement (6) according to any one of the preceding claims, wherein the protruding element (14; 14') comprises a section (17) which extends in the axial direction of the connector element (8') and which serves as a means for unlocking said connector arrangement (6) when being pushed.

5. Gas connector arrangement (6) according to any one of the preceding claims, wherein the locking ring (9; 9') further comprises a radially extending stop element (15; 15') positioned radially between the protruding element (14; 14') and the locking ring (9; 9') and constituting a limit for flexing said protruding element (14; 14') in the radial direction.

6. Gas connector arrangement (6) according to any one of the preceding claims, wherein the locking ring (9) is freely rotatable around the connector element (8).

7. Gas connector arrangement (6) according to any one of the preceding claims, wherein the locking ring (9) supports an operating arm (10) being configured for manually rotating said locking ring (9)

8. Gas connector arrangement (6) according to any one of claims 1-5, wherein said locking ring (9') is fixedly mounted on said connector element (8').

## Patentansprüche

1. Gasverbinderanordnung (6) in einem Fahrzeugmotor (2), die umfasst:
ein rohrförmiges Verbinderelement (8; 8'), das konfiguriert ist, um an einen Eingang (7) einer weiteren Komponente (3) montiert zu werden, und einen ringförmigen Verriegelungsring (9; 9'), der um einen Endabschnitt des Verbinderelements (8; 8') angeordnet ist, wobei der Verriegelungsring (9; 9') mindestens zwei Flügelelemente (11; 11', 12; 12', 13; 13') umfasst, die sich in einer radialen Richtung erstrecken und konfiguriert sind, um in entsprechende Führungsabschnitte (21a, 21b, 21c) des Eingangs (7) eingesetzt zu werden,
wobei mindestens eines der Flügelelemente (13; 13') einen Verriegelungsflügel (13; 13') mit einem elastischen Vorsprung (14; 14') bildet, der sich entlang des Umfangs des Verriegelungsrings (9; 9') erstreckt und mit einer Verriegelungsvertiefung (24) in einem entsprechenden Führungsabschnitt (21b) zusammenwirkt, nachdem der Verriegelungsring (9; 9') in Bezug auf den Eingang (7) gedreht wird,
**dadurch gekennzeichnet, dass** der elastische Vorsprung (14; 14') so konfiguriert ist, dass sich seine Spitze (14a) weiter als der Verriegelungsflügel (13; 13') in einer radialen Richtung erstreckt.

2. Gasverbinderanordnung (6) nach Anspruch 1, wobei die Verriegelungsvertiefung (24) eine sich radial erstreckende Endwand (24a) umfasst, die als eine Verriegelungswand für das vorspringende Element (14; 14') in seinem verriegelten Zustand dient.

3. Gasverbinderanordnung (6) nach einem der vorhergehenden Ansprüche, wobei das vorspringende Element (14; 14') einen ersten Abschnitt (16) umfasst, der mit dem Verriegelungsflügel (13; 13') verbunden ist und der eine Breite aufweist, die geringer als eine Breite des Verriegelungsflügels (13; 13') ist.

4. Gasverbinderanordnung (6) nach einem der vorhergehenden Ansprüche, wobei das vorspringende Element (14; 14') einen Abschnitt (17) umfasst, der sich in der axialen Richtung des Verbinderelements (8') erstreckt und der als ein Element zum Entriegeln der Verbinderanordnung (6) dient, wenn er gedrückt wird.

5. Gasverbinderanordnung (6) nach einem der vorhergehenden Ansprüche, wobei der Verriegelungsring (9; 9') außerdem ein sich radial erstreckendes Blockierelement (15; 15') umfasst, das radial zwischen dem vorspringenden Element (14; 14') und dem Verriegelungsring (9; 9') angebracht ist und eine Begrenzung für das Biegen des vorspringenden Elements (14; 14') in der radialen Richtung bildet.

6. Gasverbinderanordnung (6) nach einem der vorhergehenden Ansprüche, wobei der Verriegelungsring (9) um das Verbinderelements (8) frei drehbar ist.

7. Gasverbinderanordnung (6) nach einem der vorhergehenden Ansprüche, wobei der Verriegelungsring (9) einen Funktionsarm (10) trägt, der konfiguriert ist, um den Verriegelungsring (9) manuell zu drehen.

8. Gasverbinderanordnung (6) nach einem der Ansprüche 1 bis 5, wobei der Verriegelungsring (9') fest an das Verbinderelement (8') montiert ist.

## Revendications

1. Agencement de connecteur à gaz (6) dans un moteur de véhicule (2) et comprenant un élément de connecteur tubulaire (8; 8') configuré pour être monté sur une entrée (7) d'un composant supplémentaire (3) et une bague de verrouillage annulaire (9; 9') agencée autour d'une section d'extrémité de l'élément de connecteur (8; 8'), ladite bague de verrouillage (9; 9') comprenant au moins deux éléments d'aile (11; 11', 12; 12', 13; 13') qui s'étendent dans une direction radiale et qui sont configurés de manière à être insérés dans des sections de guidage correspondantes (21a, 21b, 21c) dans ladite entrée (7),
dans lequel au moins un desdits éléments d'aile (13; 13') constitue une aile de verrouillage (13; 13') comportant une saillie élastique (14; 14') qui s'étend le long de la périphérie de la bague de verrouillage (9; 9') et qui coopère avec un évidement de verrouillage (24) dans une section de guidage correspondante (21b) lors de la rotation de ladite bague de verrouillage (9; 9') par rapport à ladite entrée (7),
**caractérisé en ce que** ladite saillie élastique (14; 14') est configurée de telle sorte que sa pointe (14a) s'étende plus loin dans une direction radiale que ladite aile de verrouillage (13; 13').

2. Agencement de connecteur à gaz (6) selon la revendication 1, dans lequel ledit évidement de verrouillage (24) comprend une paroi d'extrémité s'étendant radialement (24a) qui sert de paroi de verrouillage pour l'élément saillant (14; 14') dans sa position verrouillée.

3. Agencement de connecteur à gaz (6) selon l'une quelconque des revendications précédentes, dans lequel l'élément saillant (14; 14') comprend une première section (16) qui se connecte à l'aile de verrouillage (13; 13') et dont la largeur est inférieure à la largeur de ladite aile de verrouillage (13; 13').

4. Agencement de connecteur à gaz (6) selon l'une quelconque des revendications précédentes, dans lequel l'élément saillant (14; 14') comprend une section (17) qui s'étend dans la direction axiale de l'élément de connecteur (8') et qui sert de moyen pour déverrouiller ledit agencement de connecteur (6) lorsqu'il est poussé.

5. Agencement de connecteur à gaz (6) selon l'une quelconque des revendications précédentes, dans lequel la bague de verrouillage (9, 9') comprend en outre un élément d'arrêt s'étendant radialement (15; 15') qui est positionné radialement entre l'élément saillant (14; 14') et la bague de verrouillage (9; 9') et qui constitue une limite pour la flexion dudit élément saillant (14; 14') dans la direction radiale.

6. Agencement de connecteur à gaz (6) selon l'une quelconque des revendications précédentes, dans lequel la bague de verrouillage (9) peut tourner librement autour de l'élément de connecteur (8).

7. Agencement de connecteur à gaz (6) selon l'une quelconque des revendications précédentes, dans lequel la bague de verrouillage (9) supporte un bras de commande (10) qui est configuré pour faire tourner manuellement ladite bague de verrouillage (9).

8. Agencement de connecteur à gaz (6) selon l'une quelconque des revendications 1 à 5, dans lequel ladite bague de verrouillage (9') est montée fixement sur ledit élément de connecteur (8').
